# EUROPEAN PATENT APPLICATION

(11) **EP 4 242 739 A1**
(43) Date of publication of application: **13.09.2023**
(21) Application number: 21889304.8
(22) Date of filing: 09.11.2021
(51) Int. Cl.: G02F 1/1333, C03C 27/12, G02F 1/13

(54) **FILM FOR LIQUID CRYSTAL DEVICE, LIQUID CRYSTAL DEVICE, AND LIGHT ADJUSTING APPARATUS**

(30) Priority: 09.11.2020 JP 2020186790
(71) Applicant: SEKISUI CHEMICAL CO., LTD., Osaka-shi Osaka 530-8565 (JP)
(72) Inventor: TERAGUCHI, Yumiko, Mishima-gun, Osaka 618-0021 (JP); OOHIGASHI, Yuji, Koka-shi, Shiga 528-8585 (JP); OKADA, Yuuki, Mishima-gun, Osaka 618-0021 (JP); URADOKORO, Kanako, Mishima-gun, Osaka 618-0021 (JP); KAMOSHIDA, Naoki, Mishima-gun, Osaka 618-0021 (JP); ISHIKAWA, Yuki, Mishima-gun, Osaka 618-0021 (JP)
(74) Representative: Ter Meer Steinmeister & Partner
(86) International application number: PCT/JP2021/041082
(87) International publication number: WO 2022/097753

(57) **Abstract**

The present invention provides a film for a liquid crystal device that is a film (15 or 16) used for a liquid crystal device (10) and contains a thermoplastic resin, in which the NI point change of liquid crystal upon contacting the film with the liquid crystal is -2°C to +2°C.

## Description

### Technical Field

The present invention relates to a film for a liquid crystal device, and a liquid crystal device and a light adjusting apparatus having the film for a liquid crystal device.

### Background Art

Laminated glass, in which two glass plates adhere to each other via an interlayer film, is widely used in window glass, especially in window glass for automobiles. As the interlayer film for laminated glass, thermoplastic resins such as polyvinyl acetal resins in which plasticizers are compounded are generally used in order to ensure penetration resistance, adhesiveness to glass, and impact absorbency.

Meanwhile, in order to enable adjustment of light transmission and other properties of transparent members such as window glass, introduction of light adjusting films comprising liquid crystal layers has been considered, and in laminated glass as well, incorporation of light adjusting films in interlayer films has been considered.

For example, Patent Literature 1 discloses a laminated window panel provided with an intermediate layer structure laminated between the first and second glass layers, in which a liquid crystal film is built inside the intermediate layer structure. The intermediate layer structure comprises a picture frame-shaped first intermediate layer disposed on the outer circumference side of the liquid crystal film, and second and third intermediate layers laminated so that the liquid crystal film is disposed therebetween. Also, Patent Literature 2 shows that two light adjusting cells composed of liquid crystal films or the like are disposed between two glass plates, and an interlayer film is also disposed between each glass plate and light adjusting cell or between the light adjusting cells, and the glass plates and light adjusting cells or the light adjusting cells are joined via the interlayer film.

Interlayer film structures in which light adjusting films are incorporated may cause low molecular components to leach into the liquid crystal, resulting in liquid crystal contamination. Leaching of low molecular components into the liquid crystal inhibits phase transition of the liquid crystal and causes display unevenness and other problems. Therefore, Patent Literature 1 shows that the components of the intermediate layer material contain no plasticizer or contain a plasticizer so that it does not migrate into the liquid crystal film. Also, Patent Literature 2 uses an interlayer film containing no plasticizer.

### Citation List

### Patent Literature

PTL1: JP-T 2009-534557
PTL2: JP 2020-030355 A

### Summary of Invention

### Technical Problem

However, Patent Literatures 1 and 2 do not show the detailed composition of the intermediate layer or interlayer film, and it is unclear whether liquid crystal contamination can be properly prevented by the disclosed contents of Patent Literatures 1 and 2, and further improvement is needed.

Therefore, an object of the present invention is to provide a film for a liquid crystal device that can prevent liquid crystal contamination in the liquid crystal device and suppress defects such as display unevenness.

### Solution to Problem

As a result of diligent investigations, the present inventors have found that the above problem can be solved by suppressing the NI point change upon contacting a film for a liquid crystal device with liquid crystal in a certain range, thereby completing the present invention as described below. That is, the gist of the present invention is as in the following [1] to [30]:
[1] A film for a liquid crystal device used for a liquid crystal device, comprising a thermoplastic resin, wherein
   the NI point change upon contacting the film for a liquid crystal device with liquid crystal is -2°C to +2°C.
[2] The film for a liquid crystal device according to the above [1], wherein
   the film comprises no plasticizer or comprises at least any of a plasticizer having a hydroxy group and a plasticizer not having a hydroxy group,
   the content of the plasticizer having a hydroxy group is 70 parts by mass or less based on 100 parts by mass of the thermoplastic resin, and
   the content of the plasticizer not having a hydroxy group is 25 parts by mass or less based on 100 parts by mass of the thermoplastic resin.
[3] The film for a liquid crystal device according to the above [2], wherein the film comprises no plasticizer or comprises a plasticizer containing a hydroxy group in an amount of 70 parts by mass or less based on 100 parts by mass of the thermoplastic resin.
[4] The film for a liquid crystal device according to any one of the above [1] to [3], wherein the thermoplastic resin is at least one selected from the group consisting of a polyvinyl acetal-based resin, an ionomer resin, a polyurethane resin, a polyolefin resin, and an ethylene-vinyl acetate copolymer resin.
[5] The film for a liquid crystal device according to the above [4], wherein the thermoplastic resin is a polyvinyl acetal-based resin.
[6] The film for a liquid crystal device according to the above [4] or [5], wherein the polyvinyl acetal-based resin comprises a modified polyvinyl acetal resin having a unit other than an acetal group, an acetyl group, and a hydroxy group.
[7] The film for a liquid crystal device according to any one of the above [4] to [6], wherein the polyvinyl acetal-based resin has a polyoxyalkylene group.
[8] The film for a liquid crystal device according to any one of the above [4] to [7], wherein the polyvinyl acetal-based resin has at least any of a hydrocarbon group other than hydrocarbon groups constituting an acetal group and an acetyl group or a polyoxyalkylene group as a side chain.
[9] The film for a liquid crystal device according to the above [8], wherein the at least any of a hydrocarbon group or a polyoxyalkylene group is linked to the main chain via any of the following linking groups: an ester bond, an ether bond, - CH₂O-, -CH₂CH₂O-, -CONH-, and a urethane bond.
[10] The film for a liquid crystal device according to the above [8] or [9], wherein the hydrocarbon group has 2 to 30 carbon atoms.
[11] The film for a liquid crystal device according to any one of the above [7] to [10], wherein the polyoxyalkylene group is linked to the main chain via any of an ether bond or -CH₂O-.
[12] The film for a liquid crystal device according to any one of the above [7] to [11], wherein the amount of modification by a functional group selected from the group consisting of the hydrocarbon group and polyoxyalkylene group is, for example, 0.2 mol% or more and 25 mol% or less.
[13] The film for a liquid crystal device according to any one of the above [7] to [12], wherein the amount of modification by the polyoxyalkylene group is 0.2 mol% or more and 12 mol% or less.
[14] The film for a liquid crystal device according to any one of the above [7] to [13], wherein the average repeating number of the polyoxyalkylene group is 4 to 120.
[15] The film for a liquid crystal device according to any one of the above [4] to [14], wherein the degree of acetalization of the polyvinyl acetal-based resin is 40 mol% or more and 90 mol% or less.
[16] The film for a liquid crystal device according to any one of the above [4] to [15], wherein the amount of hydroxy groups in the polyvinyl acetal-based resin is 0 mol% or more and 35 mol% or less.
[17] The film for a liquid crystal device according to any one of the above [1] to [16], wherein the film has a glass transition temperature of 55°C or lower.
[18] The film for a liquid crystal device according to any one of the above [1] to [17], wherein the NI point change is -1°C to +1°C.
[19] The film for a liquid crystal device according to any one of the above [1] to [18], wherein liquid crystal used upon measuring the NI point change is "JC-5001LA" manufactured by Chisso Corporation.
[20] The film for a liquid crystal device according to any one of the above [1] to [19], wherein the film has a glass transition temperature of 5°C or higher.
[21] The film for a liquid crystal device according to any one of the above [1] to [20], wherein the film comprises a plasticizer having a hydroxy group and the content of the plasticizer having a hydroxy group is 5 parts by mass or more based on 100 parts by mass of the thermoplastic resin.
[22] The film for a liquid crystal device according to any one of the above [1] to [21], wherein the film comprises a plasticizer having a hydroxy group and the plasticizer having a hydroxy group is at least one selected from the group consisting of a (poly)ether polyol, a polyester polyol, and an ether compound of a (poly)ether polyol.
[23] The film for a liquid crystal device according to any one of the above [1] to [22], wherein the film comprises a plasticizer not having a hydroxy group and the plasticizer not having a hydroxy group is an organic ester plasticizer.
[24] The film for a liquid crystal device according to any one of the above [1] to [23], wherein the film has a thickness of 100 µm or more and 2000 µm or less.
[25] The film for a liquid crystal device according to any one of the above [1] to [24], wherein the film is for a liquid crystal light adjusting cell.
[26] A liquid crystal device provided with the film for a liquid crystal device according to any one of the above [1] to [25].
[27] A light adjusting apparatus, comprising the film for a liquid crystal device according to the above [25] and a liquid crystal light adjusting cell.
[28] The light adjusting apparatus according to the above [27], wherein the light adjusting apparatus further comprises two transparent plates and an interlayer film, the liquid crystal light adjusting cell is disposed between the two transparent plates, the interlayer film is disposed between at least one of the transparent plates and the liquid crystal light adjusting cell to join them, and
   the interlayer film comprises the film for a liquid crystal device.
[29] The light adjusting apparatus according to the above [27] or [28], wherein the light adjusting apparatus further comprises two transparent plates and an interlayer film, two or more of the liquid crystal light adjusting cells are provided between the two transparent plates, the interlayer film is disposed between the liquid crystal light adjusting cells to join them, and
   the interlayer film comprises the film for a liquid crystal device.
[30] A film for an electronic device used for an electronic device,
   the film comprising a thermoplastic resin,
   the film comprising no plasticizer or comprising at least any of a plasticizer having a hydroxy group and a plasticizer not having a hydroxy group,
   wherein the content of the plasticizer having a hydroxy group is 70 parts by mass or less based on 100 parts by mass of the thermoplastic resin, and
   the content of the plasticizer not having a hydroxy group is 25 parts by mass or less based on 100 parts by mass of the thermoplastic resin.

### Advantageous Effects of Invention

The present invention provides a film for a liquid crystal device that can prevent liquid crystal contamination in the liquid crystal device and suppress defects such as display unevenness.

### Brief Description of Drawings

[Fig. 1] Fig. 1 is a schematic cross-sectional view showing one embodiment of a light adjusting apparatus to which a film for a liquid crystal device of the present invention is applied.
[Fig. 2] Fig. 2 is a schematic cross-sectional view showing another embodiment of a light adjusting apparatus to which a film for a liquid crystal device of the present invention is applied.

### Description of Embodiments

### <Film for liquid crystal device>

A film for a liquid crystal device of the present invention contains a thermoplastic resin, and the NI point change upon contacting the film for a liquid crystal device with liquid crystal is -2°C to +2°C.

Here, the NI point is the temperature at which liquid crystal undergoes phase transition from the nematic phase to the isotropic phase (isotropic phase), and can be measured from the endothermic peak top using a differential thermal analyzer (DSC). The NI point of liquid crystal is determined by the mixing composition of each component of the liquid crystal and is unique for each compounding. Meanwhile, if a substance such as a plasticizer is mixed with liquid crystal and contaminates the liquid crystal, the NI point is greatly changed. Therefore, the NI point change can be used to evaluate the degree of contamination to the liquid crystal. Then, in the present invention, when the NI point change upon contacting the film for a liquid crystal device with liquid crystal is -2°C to +2°C, defects such as display unevenness can be prevented without progressing liquid crystal contamination even if the film for a liquid crystal device is used in an environment in contact with or in close proximity to a liquid crystal device.

From the viewpoint of more effectively preventing liquid crystal contamination, the NI point change is preferably -1.5°C to +1.5°C, more preferably -1°C to + 1°C, still more preferably -0.5°C to +0.5°C, and particularly preferably -0.3°C to +0.3°C.

In the present invention, the above NI point change can be adjusted in the above range by adjusting the configuration of the thermoplastic resin, the presence or absence of plasticizer, and the type and amount of plasticizer as appropriate.

Note that the NI point change can be determined by leaving a sample bottle to which the film for a liquid crystal device and liquid crystal (manufactured by Chisso Corporation, "JC-5001LA") have been added at 100°C for 1 hour, then returning it to room temperature (25°C), taking out the liquid crystal part and using it as a liquid crystal sample for evaluation, measuring the NI points of the blank liquid crystal and the liquid crystal sample for evaluation, and calculating the difference between them. Details of the measurement conditions are as described in Examples. Note that 4-cyano-4'-pentylbiphenyl (5CB) can also be used as liquid crystal instead of "JC-5001LA" described above.

### [Glass transition temperature]

The glass transition temperature (Tg) of the film for a liquid crystal device of the present invention is, for example, 75°C or lower, but it is preferably 55°C or lower. When the film for a liquid crystal device has a glass transition temperature (Tg) of 55°C or lower, its flexibility is enhanced, and it is possible to achieve good impact absorbency and penetration resistance when used as an interlayer film. Furthermore, even when thermocompression-bonded at a relatively low temperature of about 80°C, it is possible to adhere with a high adhesive force to glass plates, substrates (such as base films and plastic substrates) constituting liquid crystal devices, and other materials. Note that liquid crystal devices may generally be damaged when heated to a high temperature, but when the film for a liquid crystal device adheres by thermocompression bonding at a low temperature as described above, it can join the liquid crystal devices to other members such as glass plates without damaging them.

From the viewpoint of adhesiveness, penetration resistance, and impact absorbency, the above glass transition temperature (Tg) is more preferably 50°C or lower, and still more preferably 45°C or lower.

The glass transition temperature (Tg) of the film for a liquid crystal device is not particularly limited in terms of the lower limit value, but from the viewpoint of achieving good handleability without developing stickiness or other properties and from the viewpoint of making it easier to adjust the NI point change in the above range, it is, for example, 5°C or higher, preferably 10°C or higher, and more preferably 15°C or higher.

Note that the glass transition temperature of the film for a liquid crystal device can be detected by carrying out viscoelasticity measurement using a dynamic viscoelasticity measuring device, and reading peak temperatures of the loss tangent tan δ obtained from the results of the viscoelasticity measurement. Details of the measurement conditions are as described in Examples.

### [Thermoplastic resin]

It is preferable that the thermoplastic resin contained in the film for a liquid crystal device be selected from the group consisting of a polyvinyl acetal-based resin, an ionomer resin, a polyurethane resin, a polyolefin resin, and an ethylene-vinyl acetate copolymer resin. By using these resins, it is easier to adjust the NI point change in a predetermined range while achieving good adhesiveness to glass plates, substrates constituting liquid crystal devices, and other materials. These thermoplastic resins may be used alone as one type, or two or more types thereof may be used in combination. Among these, a polyvinyl acetal-based resin is preferred. By using a polyvinyl acetal-based resin, excellent adhesiveness can be achieved to glass plates, substrates constituting liquid crystal devices, and other materials.

### (Polyvinyl acetal-based resin)

The polyvinyl acetal-based resin used in the film for a liquid crystal device may be a modified polyvinyl acetal resin or may be an unmodified polyvinyl acetal resin.

The polyvinyl acetal-based resin typically has acetal groups, hydroxy groups, and acetyl groups in or as side chains, but the modified polyvinyl acetal resin has a unit other than these and typically has a unit other than these as a side chain. It is preferable that the modified polyvinyl acetal resin have a hydrocarbon group or a polyoxyalkylene group as the unit other than the above, typically as a side chain. Note that the hydrocarbon group here refers to a hydrocarbon group other than hydrocarbon groups constituting an acetal group and an acetyl group, and also when "hydrocarbon group" is mentioned in the description of polyvinyl acetal resin below, it shall have the same meaning except for the case where the hydrocarbon groups of an acetal group and an acetyl group are described.

When the polyvinyl acetal-based resin has the hydrocarbon group or polyoxyalkylene group, even if the film for a liquid crystal device contains no plasticizer or the content is small, good adhesiveness can be achieved to substrates constituting liquid crystal devices, glass plates, and other materials while lowering the glass transition temperature (Tg) and ensuring a certain degree of flexibility.

Also, it is preferable that the polyvinyl acetal-based resin be a modified polyvinyl acetal resin having a polyoxyalkylene group in or as a side chain, among the above.

The unmodified polyvinyl acetal resin is obtained by acetalizing a polyvinyl alcohol with an aldehyde. The modified polyvinyl acetal resin is obtained by, for example, acetalizing a polyvinyl alcohol with an aldehyde and further allowing it to react with a modifying agent. The modified polyvinyl acetal resin may also be obtained by using a modified polyvinyl alcohol as the raw material polyvinyl alcohol and acetalizing that modified polyvinyl alcohol with an aldehyde.

It is preferable that the unit other than an acetal group, a hydroxy group, and an acetyl group be linked to the main chain via any of the following linking groups: an ester bond, an ether bond, -CH₂O-, -CH₂ CH₂O-, -CONH-, and a urethane bond. Note that, as for -CH₂O-, the carbon atom may be linked to the main chain. Similarly, as for -CH₂CH₂O- and -CONH- as well, the carbon atom may be linked to the main chain. In addition, the hydrocarbon group has 2 to 30 carbon atoms, for example. When the polyvinyl acetal-based resin contained in the film for a liquid crystal device has the structure described above, good adhesiveness can be achieved to substrates constituting liquid crystal devices, glass plates, and other materials while lowering the glass transition temperature (Tg) and enhancing flexibility.

When the unit other than an acetal group, a hydroxy group, and an acetyl group in the polyvinyl acetal-based resin contains a hydrocarbon group, it is preferable that the hydrocarbon group have a structure that is linked to the main chain via either an ester bond or a urethane bond. In addition, when a polyoxyalkylene group is contained, it is preferable that the polyoxyalkylene group have a structure that is linked to the main chain via either an ether bond or -CH₂O-.

More specifically, it is preferable that the polyvinyl acetal-based resin have at least one selected from the group consisting of functional groups represented by formula (1-1) to formula (1-3) below. When the polyvinyl acetal-based resin at least has the functional groups represented by formulae (1-1) to (1-3), even if it does not contain a plasticizer in a large amount, the glass transition temperature (Tg) of the film for a liquid crystal device can be lowered and a certain degree of flexibility can be ensured, and also, good adhesiveness can be achieved to glass plates, substrates constituting liquid crystal devices, and other materials. In addition, from the viewpoint of adhesiveness and other properties, it is more preferable to have the functional group represented by formula (1-3). 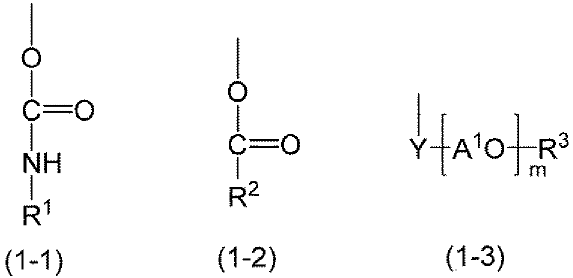 wherein, in formulae (1-1) and (1-2), R¹ and R² are each independently a hydrocarbon group having 2 to 30 carbon atoms. In formula (1-3), Y is any of the following: an oxygen atom, -CH₂O-, -CH₂CH₂O-, or -CONH-, A¹O is an oxyalkylene group having 2 to 4 carbon atoms, and m is an average repeating number and is 4 to 120. R³ is independently an alkyl group having 1 to 4 carbon atoms or a hydrogen atom. Note that the oxyalkylene group may be one type alone or may be a mixture of two or more types, for example, an oxyethylene group and an oxypropylene group.

The hydrocarbon group in R¹ and R² may have or may not have an aromatic ring, but it is preferable that it be an aliphatic hydrocarbon group not having an aromatic ring. When it is an aliphatic hydrocarbon group, adhesiveness to organic glass such as polycarbonate plates, substrates constituting liquid crystal devices, and other materials can be easily improved. In addition, the aliphatic hydrocarbon group may be linear, may be branched, or may have a ring structure. For example, when the aliphatic hydrocarbon group is branched, the glass transition temperature (Tg) can be easily lowered.

Furthermore, the aliphatic hydrocarbon group may have an unsaturated bond or may not have an unsaturated bond. The aliphatic hydrocarbon group is preferably an alkenyl group, an alkyl group, or an alkynyl group, but it is more preferably an alkyl group.

The number of carbon atoms in each of R¹ and R² is preferably 3 or more, more preferably 5 or more, still more preferably 7 or more, and even more preferably 11 or more. When the number of carbon atoms in each of R¹ and R² is increased, the glass transition temperature (Tg) of the film for a liquid crystal device can be easily lowered, and adhesiveness to organic glass and the like can be easily improved.

From the viewpoint of preventing crystallization or other problems and improving transmittance, the number of carbon atoms in each of R¹ and R² is preferably 24 or less, more preferably 20 or less, and still more preferably 18 or less.

Accordingly, R¹ and R² are each preferably an alkyl group having 3 to 24 carbon atoms, more preferably an alkyl group having 5 to 20 carbon atoms, still more preferably an alkyl group having 7 to 18 carbon atoms, and even more preferably an alkyl group having 11 to 18 carbon atoms.

Specific examples of R¹ and R² include a n-propyl group, an isopropyl group, a n-butyl group, a branched butyl group such as a s-butyl group and a t-butyl group, a n-pentyl group, a branched pentyl group, a n-hexyl group, a branched hexyl group, a n-heptyl group, a branched heptyl group such as an isoheptyl group and a 3-heptyl group, a n-octyl group, a branched octyl group such as an isooctyl group and a 2-ethylhexyl group, a n-nonyl group, a branched nonyl group such as an isononyl group, a n-decyl group, a branched decyl group, a n-undecyl group, a branched undecyl group, a n-dodecyl group, a branched dodecyl group, a n-tridecyl group, a branched tridecyl group, a n-tetradecyl group, a branched tetradecyl group, a n-pentadecyl group, a branched pentadecyl group, a n-hexadecyl group, a branched hexadecyl group, a n-heptadecyl group, a branched heptadecyl group, a n-octadecyl group, a branched octadecyl group, a n-nonadecyl group, a branched nonadecyl group, a n-icosyl group, a branched icosyl group, a n-henicosyl group, a branched henicosyl group, a n-docosyl group, a branched docosyl group, a n-tricosyl group, a branched docosyl group, a n-tetracosyl group, a branched tetracosyl group, and an oleyl group.

In formula (1-3), A¹O isan oxyalkylene group having 2 to 4 carbon atoms. The oxyalkylene group having 2 to 4 carbon atoms is an oxyethylene group, an oxypropylene group, or an oxybutylene group, preferably an oxyethylene group or an oxypropylene group, and more preferably an oxyethylene group. Note that two or more types of oxyalkylene groups may be alone as one type, or two or more types thereof may be used in combination, and in such a case, each oxyalkylene group may be added in a random manner or may be added in a block manner.
m represents the average repeating numbers of oxyalkylene groups, and are 4 to 120, preferably 8 to 110, and more preferably 12 to 100.

In addition, examples of the alkyl group in R³ include a methyl group, an ethyl group, a n-propyl group, an isopropyl group, a n-butyl group, a s-butyl group, and a t-butyl group. Also, R³ is independently an alkyl group having 1 to 4 carbon atoms or a hydrogen atom, and preferably an alkyl group having 1 to 2 carbon atoms or a hydrogen atom, more preferably a methyl group or a hydrogen atom, and still more preferably a hydrogen atom.

In formula (1-3), Y is any of the following: an oxygen atom (ether bond), - CH₂O-, -CH₂CH₂O-, or -CONH-, but it is preferably either an oxygen atom or-CH₂O-. Accordingly, it is preferably a functional group represented by formula (1-4) or (1-5) below. Note that the oxygen atom in -CH₂O- and -CH₂CH₂O-, and the nitrogen atom in -CONH- may be bonded to the carbon atom (A¹) of A¹O. 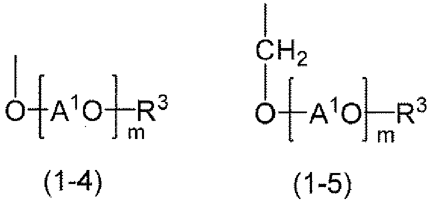 wherein, in formulae (1-4) and (1-5), A¹O, m, and R³ are each the same as described above.

Accordingly, it is particularly preferable that the functional group represented by formula (1-3) be a functional group represented by -O-(CH₂CH₂O)ₘ-H or a functional group represented by -CH₂O-(CH₂CH₂O)ₘ-H. Note that the suitable range of m in these cases are also as described above.

The polyvinyl acetal-based resin typically has acetal groups, hydroxy groups, and acetyl groups as described above. However, when the polyvinyl acetal-based resin is modified by functional groups, it does not need to contain hydroxy groups.

In addition, it is preferable that the polyvinyl acetal-based resin have, by modification, the hydrocarbon group or polyoxyalkylene group in or as a side chain, as described above, and specifically, it is preferable to have at least one functional group selected from the group consisting of the functional groups represented by the above formula (1-1) to formula (1-3).

Note that the polyvinyl acetal-based resin having the hydrocarbon group or polyoxyalkylene group in or as a side chain, typically the polyvinyl acetal-based resin having any of the functional groups represented by the above formula (1-1) to formula (1-3), may be described as a polyvinyl acetal-based resin (A) in order to distinguish it from other polyvinyl acetal-based resins.

In the polyvinyl acetal-based resin (A), the amount of modification by a functional group selected from the group consisting of the hydrocarbon group and polyoxyalkylene group is, for example, 0.2 mol% or more and 25 mol% or less. Note that the amount of modification is typically the amount of modification by the functional groups represented by the above formula (1-1) to formula (1-3).

When the amount of modification is in the above range, the glass transition temperature (Tg) can be easily lowered, the flexibility of the film can be improved, and the adhesiveness can also be easily improved to glass plates, substrates constituting liquid crystal devices, and other materials.

The suitable value of the above amount of modification depends on the types of functional groups. For example, from the viewpoint of improving adhesiveness described above, in a polyvinyl acetal-based resin having the hydrocarbon group in or as a side chain (hereinafter, this may be referred to as a "polyvinyl acetal-based resin (A-1)" for convenience's sake), the amount of modification by the hydrocarbon group (typically, the functional groups represented by formula (1-1) and formula (1-2)) is preferably 5 mol% or more and 25 mol% or less. In addition, the amount of modification is more preferably 6 mol% or more, still more preferably 8 mol% or more, and even more preferably 10 mol% or more, and also preferably 25 mol% or less, and more preferably 22 mol% or less.

In addition, from the viewpoint of improving adhesiveness described above, in a polyvinyl acetal-based resin having the polyoxyalkylene group in or as a side chain (hereinafter, this may be referred to as a "polyvinyl acetal-based resin (A-2)" for convenience's sake), the amount of modification by the polyoxyalkylene group (typically, the functional group represented by formula (1-3)) is preferably 0.2 mol% or more and 12 mol% or less. Also, the amount of modification is more preferably 0.5 mol% or more, still more preferably 0.6 mol% or more, and even more preferably 0.8 mol% or more, and also more preferably 10 mol% or less, still more preferably 8 mol% or less, and even more preferably 6 mol% or less.

Note that the amount of modification by each functional group represents the proportion of each functional group with respect to the entire vinyl monomer units constituting the polyvinyl acetal-based resin, and for example, the amount of modification by the functional groups represented by formula (1-1) and formula (1-2) represents the total amount of the proportions of these functional groups. Note that the amount of modification can be determined by carrying out proton NMR measurement on the polyvinyl acetal-based resin and calculating it from the obtained spectrum. The degree of acetalization, the amount of hydroxy groups, and the degree of acetylation, as will be described later, can also be determined in the same manner by carrying out proton NMR measurement and calculating them from the obtained spectrum.

The polyvinyl acetal-based resin does not need to have the polyoxyalkylene group or hydrocarbon group as a side chain. Such a polyvinyl acetal-based resin may be a modified polyvinyl acetal resin having a functional group other than the polyoxyalkylene group and hydrocarbon group (typically, a functional group other than the functional groups represented by formulae (1-1) to (1-3)), or it may be an unmodified polyvinyl acetal resin. Even when it is an unmodified polyvinyl acetal resin, the glass transition temperature (Tg) can be easily lowered by compounding a plasticizer, as will be described later.

The polyvinyl acetal-based resin has vinyl group-derived constituent units as the main chain, and the functional groups represented by formulae (1-1) to (1-3) may be those bonded to the vinyl group-derived constituent units constituting the main chain. Accordingly, it is preferable that the polyvinyl acetal-based resin have any of the constituent units represented by formula (2-1) to formula (2-3) below, and it is more preferable that it have any of the constituent unit represented by formula (2-3). 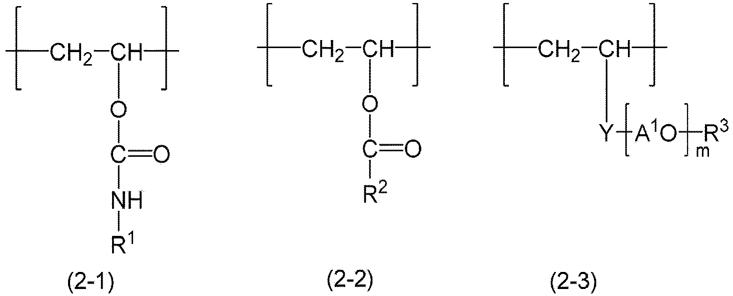 wherein, in formulae (2-1) and (2-2), R¹ and R² are each the same as described above. In formulae (2-3), Y, A¹O, m, and R³ are each the same as described above.

The polyvinyl acetal-based resin typically has acetal groups, hydroxy groups, and acetyl groups, and that is, the polyvinyl acetal-based resin typically has the constituent units represented by formula (3-1), formula (3-2), and formula (3-3) below. Accordingly, it is preferable that the modified polyvinyl acetal resin have the constituent units represented by formula (3-1), formula (3-2), and formula (3-3) below and at least one constituent unit selected from the group consisting of formula (2-1) to formula (2-3) described above.

However, the polyvinyl acetal-based resin does not need to have hydroxy groups as described above, and it does not need to have the constituent unit represented by formula (3-2). That is, the polyvinyl acetal-based resin has the constituent units represented by formula (3-1) and formula (3-3) below, and it is preferable that it further have the constituent unit represented by formula (3-2) below. 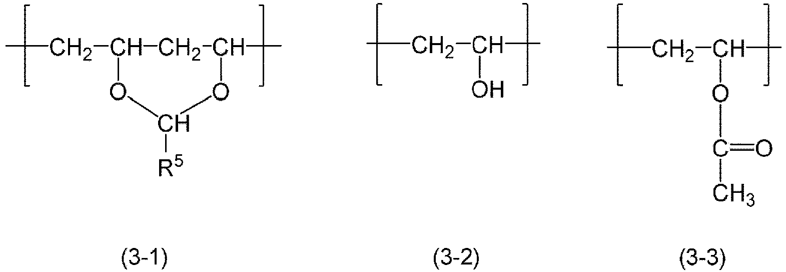 wherein, in formula (3-1), R⁵ represents a hydrogen atom or a hydrocarbon group having 1 to 19 carbon atoms.

As described above, the polyvinyl acetal-based resin is obtained by acetalizing a polyvinyl alcohol or a modified polyvinyl alcohol, which is formed by modifying a polyvinyl alcohol, with an aldehyde, followed by modification if required, and as the polyvinyl alcohol, a polyvinyl alcohol with a degree of saponification of 80 to 99.8 mol% is generally used. In addition, the average degree of polymerization of the polyvinyl alcohol is preferably 300 or more and 5000 or less in order to adjust the average degree of polymerization of the polyvinyl acetal-based resin in the desired range. The average degree of polymerization of the polyvinyl alcohol can be determined by a method in accordance with JIS K6726 "Testing Methods for Polyvinyl Alcohol".

The number of carbon atoms in the acetal group contained in the polyvinyl acetal-based resin is not particularly limited, but as represented by the above formula (3-1), it is 1 to 20, for example, preferably 2 to 10, more preferably 2 to 6, and still more preferably 2, 3, or 4. Accordingly, the number of carbon atoms in R⁵ represented in the above formula (3-1) is preferably 1 to 9, more preferably 1 to 5, and still more preferably 1 to 3.

As the acetal group, specifically, a butyral group is particularly preferred, and accordingly, a polyvinyl butyral-based resin is preferred as the polyvinyl acetal-based resin. The degree of acetalization (that is, amount of acetal groups) of the polyvinyl acetal-based resin is preferably 40 mol% or more and 90 mol% or less. In addition, the degree of acetalization is more preferably 55 mol% or more, and still more preferably 60 mol% or more, and also more preferably 85 mol% or less, and still more preferably 83 mol% or less. When the degree of acetalization is in these ranges, it is easier to allow the functional groups represented by formula (1-1) to formula (1-3) to be contained in a certain amount while keeping the amount of hydroxy groups in a moderate amount.

Note that the degree of acetalization means the degree of acetoacetalization when the acetal group of the polyvinyl acetal-based resin is an acetoacetal group, and it means the degree of butyralization when the acetal group is a butyral group.

In addition, the degree of acetalization represents the proportion of acetalized vinyl alcohol units with respect to the entire vinyl monomer units constituting the polyvinyl acetal-based resin.

The amount of hydroxy groups in the polyvinyl acetal-based resin is preferably 35 mol% or less. When the amount of hydroxy groups is 35 mol% or less, the glass transition temperature (Tg) can be easily lowered, and adhesiveness to organic glass such as polycarbonate plates can be easily enhanced. From such a viewpoint, in the case of the polyvinyl acetal-based resin (A), the amount of hydroxy groups is more preferably 30 mol% or less, and still more preferably 25 mol% or less.

The amount of hydroxy groups in the polyvinyl acetal-based resin may be 0 mol% or more, but in the case of the polyvinyl acetal-based resin (A), it may contain not less than a certain amount of hydroxy groups from the viewpoint of preventing the film from being too flexible, and for example, the amount of hydroxy groups is 5 mol% or more, preferably 9 mol% or more, and more preferably 11 mol% or more.

Meanwhile, the amount of hydroxy groups in the unmodified polyvinyl acetal resin is preferably 35 mol% or less as described above, but it is also preferably 20 mol% or more, and more preferably 25 mol% or more.

Note that the amount of hydroxy groups represents the proportion of hydroxy groups with respect to the entire vinyl monomer units constituting the polyvinyl acetal-based resin.

The degree of acetylation (the amount of acetyl groups) of the above polyvinyl acetal-based resin is, for example, 40 mol% or less, but it is preferably 20 mol% or less, and more preferably 10 mol% or less. When the degree of acetylation is at or below the upper limit value described above, for example, in the case of polyvinyl acetal-based resin (A), the amount of modification by functional groups such as the hydrocarbon group and polyoxyalkylene group can be set at or above a certain value. In addition, the degree of acetylation of the polyvinyl acetal-based resin is, for example, 0.01 mol% or more, but it is preferably 0.1 mol% or more, and more preferably 0.5 mol% or more.

Note that the degree of acetylation represents the proportion of acetyl groups with respect to the entire vinyl monomer units constituting the polyvinyl acetal-based resin.

The average degree of polymerization of the polyvinyl acetal-based resin is preferably 300 or more and 5000 or less. By adjusting the average degree of polymerization in the above range, adhesiveness can be easily improved while maintaining mechanical strength, flexibility, and other properties well. The average degree of polymerization of the polyvinyl acetal-based resin is more preferably 500 or more, and still more preferably 700 or more. In addition, by lowering the average degree of polymerization, the glass transition temperature can be lowered, thereby improving processability and other properties when making it into a film. From such a viewpoint, the average degree of polymerization is more preferably 4500 or less, and still more preferably 3500 or less.

Note that the average degree of polymerization of the polyvinyl acetal-based resin is the same as the average degree of polymerization of the raw material polyvinyl alcohol, and can be determined from the average degree of polymerization of the polyvinyl alcohol.

The aldehyde used in producing the polyvinyl acetal-based resin is not particularly limited, and is, for example, an aldehyde having 1 to 20 carbon atoms, and an aldehyde having 2 to 10 carbon atoms is suitably used. The above aldehyde having 2 to 10 carbon atoms is not particularly limited, and examples thereof include acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Above all, aldehydes having 2 to 6 carbon atoms such as acetaldehyde, n-butyraldehyde, n-hexylaldehyde, and n-valeraldehyde are preferred, aldehydes having 2, 3 and 4 carbon atoms are more preferred, and n-butyraldehyde is still more preferred. These aldehydes may be used alone, or two or more types thereof may be used in combination.

The polyvinyl acetal-based resin used in the present invention may be used alone as one type, or two or more types thereof may be used in combination.

When the polyvinyl acetal-based resin is used as the thermoplastic resin in the film for a liquid crystal device of the present invention, the polyvinyl acetal-based resin may be used alone, or it may be used in combination with a thermoplastic resin other than the polyvinyl acetal-based resin. The thermoplastic resin other than the polyvinyl acetal-based resin may be selected from the thermoplastic resins described above as appropriate. However, it is preferable that the polyvinyl acetal-based resin be the main component. Specifically, the total amount of the polyvinyl acetal-based resin is, for example, 50% by mass or more, preferably 70% by mass or more, more preferably 90% by mass or more, and most preferably 100% by mass based on the entire amount of the resin contained in the film for a liquid crystal device.

### [Method for producing polyvinyl acetal-based resin]

The polyvinyl acetal-based resin used for the film for a liquid crystal device in the present invention is obtained by acetalizing a polyvinyl alcohol (also referred to as a "raw material polyvinyl alcohol") with an aldehyde and then allowing it to react with a modifying agent, if required. The raw material polyvinyl alcohol may be an unmodified polyvinyl alcohol, but in the case of obtaining a modified polyvinyl acetal resin, a modified polyvinyl alcohol may be used as the raw material polyvinyl alcohol.

Specifically, for example, when producing the polyvinyl acetal-based resin having at least one selected from the group consisting of the functional groups represented by the above formula (1-1) and formula (1-2) (modified polyvinyl acetal resin (A-1)), it is preferable to produce it by the production method (1) below.

### (Production method (1))

In the present production method (1), the raw material polyvinyl alcohol is acetalized with an aldehyde to obtain a polyvinyl acetal-based resin (hereinafter, also referred to as a raw material polyvinyl acetal-based resin). The raw material polyvinyl alcohol used here is obtained by saponifying a polyvinyl ester, and it is preferably an unmodified polyvinyl alcohol.

Next, a modifying agent having R¹ or R² is allowed to react with the above raw material polyvinyl acetal-based resin to introduce at least any of the functional groups represented by formula (1-1) and formula (1-2) into the raw material polyvinyl acetal-based resin. Here, the modifying agent may be a compound having a reactive group that reacts with a hydroxy group that the raw material polyvinyl acetal-based resin has to form a urethane bond represented in formula (1-1) or an ester bond represented in formula (1-2).

Specific examples of the compound having reactivity to react with a hydroxy group to form a urethane bond include an isocyanate compound represented by R¹-NCO (where R¹ is the same as described above). The isocyanate compound has high reactivity with a hydroxy group that the raw material polyvinyl acetal-based resin has, and the functional group represented by formula (1-1) can be readily introduced.

Also, examples of the compound having a reactive group that reacts with a hydroxy group to form an ester bond include a carboxylic acid represented by R²-COOH (where R² is the same as described above), or a carboxylic acid derivative such as a carboxylic anhydride, a carboxylate ester, and a carboxylic acid halide. Among these, a carboxylic acid halide represented by R²-COX (where R² is the same as described above and X is a halogen atom) is preferred, and a carboxylic acid chloride where X is a chlorine atom is more preferred. The carboxylic acid halide such as a carboxylic acid chloride has high reactivity with a hydroxy group that the raw material polyvinyl acetal-based resin has, and the functional group represented by formula (1-2) can be readily introduced.

Specific examples of the preferred isocyanate compound include alkyl isocyanate, such as hexyl isocyanate, 2-ethylhexyl isocyanate, n-octyl isocyanate, n-nonyl isocyanate, n-decyl isocyanate, n-undecyl isocyanate, n-dodecyl isocyanate, n- tetradecyl isocyanate, n-hexadecyl isocyanate, n-octadecyl isocyanate, and n-icosyl isocyanate, and n-octadecyl isocyanate is preferred.

Also, examples of the preferred carboxylic acid chloride include 2-ethylhexanoyl chloride, n-octanoyl chloride, n-nonanoyl chloride, n-decanoyl chloride, n-undecanoyl chloride, lauroyl chloride, myristyl chloride, palmitoyl chloride, isopalmitoyl chloride, stearoyl chloride, isostearoyl chloride, oleoyl chloride, and behenic acid chloride. Among these, preferred is any of the following: 2-ethylhexanoyl chloride, lauroyl chloride, myristyl chloride, palmitoyl chloride, and stearoyl chloride, and more preferred are lauroyl chloride, myristyl chloride, and palmitoyl chloride.

In the above production method (1), the reaction of the raw material polyvinyl acetal-based resin and the modifying agent such as isocyanate compound or carboxylic acid halide is not particularly limited, but it may be carried out by, for example, heating the raw material polyvinyl acetal-based resin and the modifying agent in a solvent at, for example, 30°C or higher and 150°C or lower, preferably at about 50°C or higher and 140°C or lower. The reaction may be carried out in the presence of a base or an acid, and for example, pyridine or the like is used as the base.

However, the method for producing the modified polyvinyl acetal resin (A-1) is not limited to the above, and it may be produced by obtaining a modified polyvinyl alcohol and acetalizing that modified polyvinyl alcohol, as shown in the production method (2) below.

### (Production method 2)

In the present production method (2), at first, a modified polyvinyl alcohol is produced as the raw material polyvinyl alcohol. Specifically, a modifying agent is allowed to react with an unmodified polyvinyl alcohol obtained by saponifying a polyvinyl ester to introduce the functional group of formula (1-1) or formula (1-2) into some of the side chains of the polyvinyl alcohol. Note that specific examples of the modifying agent are as exemplified in the above production method (1). Then, the obtained modified polyvinyl alcohol is acetalized with an aldehyde to obtain the polyvinyl acetal-based resin (A).

Also, for example, when producing the polyvinyl acetal-based resin having at least any of the functional groups represented by the above formula (1-3) (modified polyvinyl acetal resin (A-2)), it is preferable to produce it by the production method (3) below.

### (Production method (3))

In the present production method (3), at first, a polyoxyalkylene-modified polyvinyl alcohol is produced as the raw material polyvinyl alcohol. Specifically, it is obtained by polymerizing a vinyl ester and a monomer having a polyoxyalkylene group and having a double bond to obtain a polymer, and then saponifying the polymer. For the saponification, an alkali or an acid is generally used, but it is preferable to use an alkali. As the PVA-based polymer, only one type may be used, or two or more types thereof may be used in combination.

Next, the polyoxyalkylene-modified polyvinyl alcohol obtained as described above may be acetalized with an aldehyde to obtain the modified polyvinyl acetal resin (A-2). The method for acetalization may be carried out by known methods.

As the vinyl ester used in the production method (3), vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, and others can be used. Among these, vinyl acetate is preferred.

In addition, examples of the monomer having a polyoxyalkylene group and having a double bond used in the production method (3) include a vinyl monomer having a vinyl group, and specific examples thereof include a monomer represented by formula (4) below. 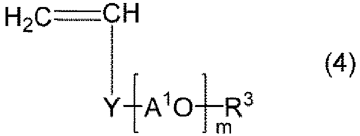 wherein, in formula (4), Y, A¹O, m, and R³ are each the same as described above.

The monomer having a polyoxyalkylene group and having a double bond described above is preferably a vinyl ether in which Y is an oxygen atom or an allyl ether in which Y is -CH₂O-, as described above. Preferred specific examples thereof include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, and polyoxypropylene monoallyl ether, and among these, polyoxyethylene monovinyl ether, polyoxyethylene monoallyl ether, polyoxypropylene monovinyl ether, polyoxypropylene monoallyl ether, and polyoxyethylene polyoxypropylene monoallyl ether are more preferred.

### (Ethylene-vinyl acetate copolymer resin)

The ethylene-vinyl acetate copolymer resin may be a non-crosslinked ethylene-vinyl acetate copolymer resin, or may be a high temperature crosslinked ethylene-vinyl acetate copolymer resin. As the ethylene-vinyl acetate copolymer resin, ethylene-vinyl acetate modified resins such as ethylene-vinyl acetate copolymer saponified products and ethylene-vinyl acetate hydrolysates can also be used.

In the ethylene-vinyl acetate copolymer resin, the vinyl acetate content, as measured in accordance with JIS K 6730 "Testing methods for ethylene/vinyl acetate copolymer materials" or JIS K 6924-2:1997, is preferably 10% by mass or more and 50% by mass or less, and more preferably 25% by mass or more and 45% by mass or less. When the vinyl acetate content is at or above these lower limit values, the adhesiveness to glass is enhanced, and when used in laminated glass, the laminated glass is more likely to have good penetration resistance. In addition, when the vinyl acetate content is at or below these upper limit values, the breaking strength of the resin layer is increased and the laminated glass has good impact resistance.

### (Ionomer resin)

As the ionomer resin, there is no particular limitation, and a variety of ionomer resins can be used. Specific examples thereof include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, and transparency of laminated glass, as will be described later, and in terms of excellent adhesiveness to glass.

As the ethylene-based ionomer, an ionomer of ethylene-unsaturated carboxylic acid copolymer is suitably used because of its excellent transparency and toughness. The ethylene-unsaturated carboxylic acid copolymer is a copolymer having at least constituent units derived from ethylene and constituent units derived from an unsaturated carboxylic acid, and may also have constituent units derived from another monomer.

Examples of the unsaturated carboxylic acid include acrylic acid, methacrylic acid, and maleic acid, with acrylic acid and methacrylic acid being preferred, and methacrylic acid being particularly preferred. In addition, examples of the other monomer include an acrylate ester, a methacrylate ester, and 1-butene.

The ethylene-unsaturated carboxylic acid copolymer preferably has 75 to 99 mol% of constituent units derived from ethylene and preferably has 1 to 25 mol% of constituent units derived from the unsaturated carboxylic acid, when the entire constituent units that the copolymer has are 100 mol%.

The ionomer of ethylene-unsaturated carboxylic acid copolymer is an ionomer resin obtained by neutralizing or crosslinking at least part of the carboxyl groups that the ethylene-unsaturated carboxylic acid copolymer has with metal ions, and the degree of neutralization of the carboxyl groups is usually 1 to 90%, and preferably 5 to 85%.

Examples of the ion source in the ionomer resin include alkali metals such as lithium, sodium, potassium, rubidium, and cesium, and polyvalent metals such as magnesium, calcium, and zinc, with sodium and zinc being preferred.

There is no particular limitation on the method for producing the ionomer resin, and it can be produced by conventionally known production methods. For example, when using an ionomer of ethylene-unsaturated carboxylic acid copolymer as the ionomer resin, ethylene and an unsaturated carboxylic acid are subjected to radical copolymerization at a high temperature and at a high pressure to produce an ethylene-unsaturated carboxylic acid copolymer, for example. Then, that ethylene-unsaturated carboxylic acid copolymer is allowed to react with a metal compound containing the above ion source, thereby producing the ionomer of ethylene-unsaturated carboxylic acid copolymer.

### (Polyurethane resin)

Examples of the polyurethane resin include a polyurethane obtained by allowing an isocyanate compound and a diol compound to react with each other, and a polyurethane obtained by allowing an isocyanate compound and a diol compound, as well as a chain length extender such as a polyamine, to react with each other. The polyurethane resin may also contain sulfur atoms. In that case, part of or all of the above diol may be selected from a polythiol and a sulfur-containing polyol. The polyurethane resin can provide good adhesiveness to organic glass. Therefore, it is suitably used in applications for adhering to organic glass.

### (Polyolefin-based resin)

The polyolefin-based resin may be a polyethylene-based resin, a polypropylene-based resin, a polybutene-based resin, or a poly(4-methylpentene-1)-based resin, or may be a cyclic olefin-based copolymer.

### [Plasticizer]

The film for a liquid crystal device of the present invention may contain a plasticizer or may not contain a plasticizer. When the film for a liquid crystal device contains a plasticizer, the glass transition temperature can be lowered and the flexibility can be enhanced. Therefore, it is easier to achieve good adhesiveness, penetration resistance, shock absorbency, and other properties. When using a plasticizer, it is preferable to use it in combination with a polyvinyl acetal-based resin. The use of a plasticizer in combination with a polyvinyl acetal-based resin makes it easier to further improve adhesiveness.

On the other hand, when the film for a liquid crystal device does not contain a plasticizer, liquid crystal contamination by the plasticizer is prevented, and the above NI point change can be made small. In addition, when the film for a liquid crystal device contains a plasticizer, it may erode organic glass and substrates (such as base films and plastic substrates) constituting liquid crystal devices, but when the film does not contain a plasticizer, erosion of organic glass and substrates can also be prevented.

The plasticizer may be either a plasticizer having a hydroxy group or a plasticizer not having a hydroxy group, but a plasticizer having a hydroxy group is preferred. The plasticizer having a hydroxy group can suppress leaching into the liquid crystal to suppress the NI point change while enhancing the flexibility of the film for a liquid crystal device. Erosion of organic glass and substrates constituting liquid crystal devices can also be suppressed. Furthermore, it is easier to achieve good adhesiveness to glass and other properties.

On the other hand, the plasticizer not having a hydroxy group easily leaches into the liquid crystal and causes the NI point of the liquid crystal to change, but it can be used as long as it is used in a relatively small amount so that the NI point change is small. In addition, the plasticizer not having a hydroxy group can also suppress erosion of organic glass and substrates constituting liquid crystal devices as long as it is in a relatively small amount.

From the above viewpoints, it is preferable for the film for a liquid crystal device of the present invention to be in a form that does not contain a plasticizer or in a form that contains only a small amount of a plasticizer.

In addition, when the film for a liquid crystal device contains a plasticizer, it is preferably in a form that uses a plasticizer containing a hydroxy group, in which case it is possible for the film for a liquid crystal device to contain the plasticizer containing a hydroxy group even in a relatively large amount. Specifically, when a plasticizer having a hydroxy group is used, it is preferable that the content of the plasticizer having a hydroxy group in the film for a liquid crystal device be 70 parts by mass or less based on 100 parts by mass of the thermoplastic resin. By setting the content to 70 parts by mass or less, elution of the plasticizer into the liquid crystal can be suppressed while lowering the glass transition temperature, and the NI point change can also be suppressed to a small degree. Furthermore, erosion of organic glass and substrates constituting liquid crystal devices can also be suppressed. From the above viewpoints, the content of the plasticizer containing a hydroxy group is more preferably 60 parts by mass or less and still more preferably 50 parts by mass or less based on 100 parts by mass of the thermoplastic resin.

In addition, when the film for a liquid crystal device contains a plasticizer having a hydroxy group, its content is preferably 5 parts by mass or more, more preferably 10 parts by mass or more, and still more preferably 15 parts by mass or more based on 100 parts by mass of the thermoplastic resin. When the content of the plasticizer having a hydroxy group is at or above these lower limit values, the glass transition temperature can be sufficiently lowered, and good flexibility, adhesiveness, and other properties can be achieved.

On the other hand, when a plasticizer not having a hydroxy group is used, the amount of the plasticizer not containing a hydroxy group used may only be a small amount. Specifically, in the film for a liquid crystal device, the content of the plasticizer not containing a hydroxy group may be 25 parts by mass or less based on 100 parts by mass of the thermoplastic resin. When the content is 25 parts by mass or less, even with the plasticizer not having a hydroxy group, the NI point change is relatively suppressed and the NI point change can be kept in the range described above. In addition, erosion of organic glass and substrates constituting liquid crystal devices can also be suppressed.

From these viewpoints, the content of the plasticizer not containing a hydroxy group is preferably 20 parts by mass or less, more preferably 10 parts by mass or less, still more preferably 5 parts by mass or less, even more preferably 3 parts by mass or less, and most preferably 0 parts by mass based on 100 parts by mass of the thermoplastic resin. That is, it is most preferable that the film for a liquid crystal device not contain the plasticizer not having a hydroxy group.

The film for an electronic device may only contain either one of the plasticizer having a hydroxy group and the plasticizer not having a hydroxy group, but both of them may be used in combination. When used in combination, the content of each plasticizer (plasticizer having a hydroxy group and plasticizer not having a hydroxy group) may be as described above. However, the total content of the plasticizers when used in combination is preferably 70 parts by mass or less, more preferably 60 parts by mass or less, and still more preferably 50 parts by mass or less, and also preferably 10 parts by mass or more, more preferably 20 parts by mass or more, and still more preferably 30 parts by mass or more, based on 100 parts by mass of the thermoplastic resin from the viewpoints of suppressing the NI point change while lowering the glass transition temperature and improving flexibility and adhesiveness, and further suppressing erosion of organic glass and substrates.

### <<Plasticizer containing hydroxy group>>

Examples of the plasticizer having a hydroxy group include a polyol such as (poly)ether polyol and polyester polyol, or an ether compound of (poly)ether polyol. The (poly)ether polyol is a polyol having one or two or more ether groups, and examples thereof include a (poly)alkylene glycol. Examples of the ether compound of (poly)ether polyol include a polyoxyalkylene ether.

Specific examples of the (poly)alkylene glycol include one or more compound simple substances selected from the group consisting of ethylene glycol, 1,2-propylene glycol, 1,3-propylene glycol, butylene glycol, and others, or their polymers, specifically polyethylene glycol, polypropylene glycol, and poly(ethylene oxide/propylene oxide) block or random copolymers, and furthermore, poly(tetramethylene ether glycol) and others may be used.

The polyoxyalkylene ether is an ether compound of a monohydric or polyhydric alcohol and a polyoxyalkylene. Examples thereof include polyoxyethylene hexyl ether, polyoxyethylene heptyl ether, polyoxyethylene octyl ether, polyoxyethylene 2-ethylhexyl ether, polyoxyethylene nonyl ether, polyoxyethylene decyl ether, polyoxyethylene allyl ether, polyoxypropylene allyl ether, polyoxyethylene glyceryl ether, polyoxypropylene glyceryl ether, polyoxyethylene diglyceryl ether, polyoxypropylene diglyceryl ether, and polyoxyalkylene pentaerythritol ether. The polyoxyalkylene ether is preferably an ether compound of a polyhydric alcohol and a polyoxyalkylene, more preferably an ether compound of glycerin or diglycerin and a polyoxyalkylene, and still more preferably an ether compound of glycerin or diglycerin and polyoxypropylene.

Examples of the polyester polyol include a condensation product of a polyvalent carboxylic acid and a polyhydric alcohol, and a lactone-based product resulting from polymerization of ε-caprolactone. In the condensation product, the preferred polyvalent carboxylic acid is a dicarboxylic acid. Examples of the polyvalent carboxylic acid include terephthalic acid, isophthalic acid, adipic acid, trimellitic acid, and citric acid. Examples of the polyhydric alcohol include ethylene glycol, diethylene glycol, propylene glycol, butylene glycol, neopentyl glycol, 1,6-hexanediol, octanediol, glycerin, and pentaerythritol.

In addition, examples of the lactone-based product include polypropiolactonediol, polybutyrolactonediol, polyhexanolactonediol, and polycaprolactonediol. In addition, examples of the polyester polyol also include a polylactide, a polyglycolide, a polydioxanone, and a poly(lactide-co-glycolide).

Other than the above, examples of the plasticizer containing a hydroxy group include octyl alcohol, decyl alcohol, lauryl alcohol, myristyl alcohol, cetyl alcohol, cetostearyl alcohol, stearyl alcohol, behenyl alcohol, 2-hexyl-1-decanol, 2-octyldodecanol, and hydroxyethyl 2-ethylhexyl phthalate.

The plasticizer containing a hydroxy group may be used alone as one type, but two or more types thereof may be used in combination.

The plasticizer having a hydroxy group only needs to have at least one hydroxy group in the molecule, but the average number of functional groups, expressed as the number of hydroxy groups, is preferably 2 or more, and more preferably 2 to 4.

Although it is not particularly limited, the plasticizer containing a hydroxy group preferably has a molecular weight of 150 to 10000, and more preferably 200 to 5000. When the molecular weight is at or above these lower limit values, compatibility with the liquid crystal is reduced, liquid crystal contamination by the plasticizer is prevented, and occurrence of the NI point change can be suppressed. In addition, when the molecular weight is 10000 or less, good compatibility with the thermoplastic resin such as polyvinyl acetal-based resin is achieved, and the transparency of the film for a liquid crystal device can be ensured.

Note that the above molecular weight is a molecular weight determined from the formula weight if the plasticizer is a monomer whose formula weight can be specified, or it may be a number average molecular weight if the plasticizer is a mixture. In addition, for the polyol, the molecular weight may be determined according to the expression below by measuring the hydroxy value (mgKOH/g).
Number average molecular weight = hydroxy value × N × 1,000/56.11
N: average number of functional groups in polyol
Note that the hydroxy value may be measured according to JIS K 1557-1.

### <<Plasticizer not having hydroxy group>>

Examples of the plasticizer not having a hydroxy group include an organic ester plasticizer, as well as a phosphorus-based plasticizer such as an organophosphate plasticizer and an organophosphite plasticizer. The plasticizer may be used alone as one type, or two or more types thereof may be used in combination. Above all, the organic ester plasticizer is preferred. Examples of the organic ester plasticizer include a monobasic organic acid ester and a polybasic organic acid ester.

Examples of the monobasic organic acid ester include an ester of a glycol and a monobasic organic acid. Examples of the glycol include a polyalkylene glycol in which each alkylene unit has 2 to 4 carbon atoms, preferably 2 or 3 carbon atoms, and the repeating number of the alkylene unit is 2 to 10, preferably 2 to 4. In addition, the glycol may be a monoalkylene glycol (that is, the repeating unit is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples thereof include butyric acid, isobutyric acid, caproic acid, 2-ethylbutyric acid, heptylic acid, n-octylic acid, 2-ethylhexylic acid, n-nonylic acid, and decylic acid.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

In addition, examples of the polybasic organic acid ester include an ester compound of a dibasic organic acid having 4 to 12 carbon atoms, such as adipic acid, sebacic acid, and azelaic acid, and an alcohol having 4 to 10 carbon atoms. The alcohol having 4 to 10 carbon atoms may be linear, may have a branched structure, or may have a cyclic structure.

Specific examples thereof include dibutyl sebacate, dioctyl azelate, dihexyl adipate, dioctyl adipate, hexyl cyclohexyl adipate, diisononyl adipate, heptyl nonyl adipate, dibutyl carbitol adipate, and a mixed adipate ester. Alternatively, it may be an oil-modified alkyd sebacate. Examples of the mixed adipate ester include an adipate ester fabricated from two or more alcohols selected from the group consisting of alkyl alcohols having 4 to 9 carbon atoms and cyclic alcohols having 4 to 9 carbon atoms.

Examples of the above organic phosphate plasticizer include a phosphate ester such as tributoxyethyl phosphate, isodecyl phenyl phosphate, and triisopropyl phosphate.

Among the above, triethylene glycol-di-2-ethylhexanoate (3GO) is particularly suitably used as the plasticizer.

The plasticizer not containing a hydroxy group may be used alone as one type, but two or more types thereof may be used in combination.

### (Other additives)

In addition to the plasticizer, the film for a liquid crystal device may also contain other known additives that are used in combination with the thermoplastic resin such as polyvinyl acetal-based resin, as appropriate. Specific examples of the additives other than the plasticizer include an ultraviolet absorber, an infrared absorber, an antioxidant, a light stabilizer, an adhesive force adjuster, a pigment, a dye, a fluorescent whitening agent, and a crystal nucleating agent.

### (Thickness of film for liquid crystal device)

The thickness of the film for a liquid crystal device of the present invention is, for example, 100 µm or more and 2000 µm or less, preferably 200 µm or more and 1500 µm or less, and still more preferably 250 µm or more and 900 µm or less. By keeping the thickness of the film for a liquid crystal device in such a range, it is possible to achieve good adhesiveness to liquid crystal devices, glass plates, and other materials without making it thicker than necessary.

### [Multilayer film]

The film for a liquid crystal device may also be used in a multilayer film comprising a plurality of resin layers. When it is used in a multilayer film, at least one of the plurality of resin layers may be the film for a liquid crystal device of the present invention.

In that case, the film for a liquid crystal device may constitute any resin layer of the plurality of resin layers, but it is preferable that it constitute the outermost layer. When the film for a liquid crystal device of the present invention constitutes the outermost layer, the multilayer film may be used, for example, by bringing the film for a liquid crystal device into contact with a liquid crystal device and further allowing the liquid crystal device and the film for a liquid crystal device to adhere to each other, and in such a case, the film can effectively suppress liquid crystal contamination. In addition, by lowering the glass transition temperature of the film for a liquid crystal device, it can also adhere to the liquid crystal device with a high adhesive force.

One or more of the plurality of resin layers in the multilayer film does not have to be the film for a liquid crystal device of the present invention, as described above, but even in that case, it is preferable that the resin layers be thermoplastic resin layers. The thermoplastic resin constituting the thermoplastic resin layers may be any of the various thermoplastic resins described above, and plasticizers and other additives may be compounded in the thermoplastic resin layers, if required.

### <Method for producing film for liquid crystal device>

In production of the film for a liquid crystal device, the raw materials for the film are first prepared in order to obtain the film for a liquid crystal device. As for the raw materials for the film, the polyvinyl acetal-based resin produced as described above and other thermoplastic resins can be used as they are as the raw materials for the film. Also, the raw materials for the film may be prepared by adding a plasticizer, other additives, and other agents to the polyvinyl acetal-based resin produced as described above and other thermoplastic resins, if required. In addition, the raw materials for the film may be diluted in a solvent as appropriate.

The above raw materials for the film may be molded into the form of a film by known methods to make the film for a liquid crystal device. Specifically, the raw materials for the film may be applied to a support such as a release sheet, or poured into a mold, heated and dried as appropriate if required, and molded into the form of a sheet, or they may be molded by extrusion molding, press molding, or other methods.

Also, when the polyvinyl acetal-based resin is obtained by allowing a raw material polyvinyl acetal-based resin to react with a modifying agent, as described above, it may be molded as follows. That is, the raw materials for the film containing the raw material polyvinyl acetal-based resin, the modifying agent, and other additives such as a plasticizer compounded if required, may be applied onto a support such as a release sheet, or poured into a mold, and then heated, thereby allowing the modifying agent to react with the raw material polyvinyl acetal-based resin and molding the composition into the form of a film to obtain the film for a liquid crystal device.

Furthermore, when the film for a liquid crystal device is used for a multilayer film, the raw materials for the films may also be prepared in order to obtain resin layers other than the film for a liquid crystal device (other resin layers), and the other resin layers may be obtained from the raw materials for the films. In the case of a multilayer film, the film for a liquid crystal device and other resin layers may be overlapped and molded as appropriate, and for example, they may be molded by co-extrusion or other methods.

### <Liquid crystal device>

The film for a liquid crystal device of the present invention is used for a liquid crystal device. Although the arrangement manner of the film for a liquid crystal device is not particularly limited as long as it is used for a liquid crystal device, for example, it may be used by being laminated on the liquid crystal device, or it may be used by being disposed around the liquid crystal device. When disposed around the liquid crystal device, the film for a liquid crystal device may be molded into the form of a frame so as to surround the liquid crystal device. In addition, it is preferable that the film for a liquid crystal device be disposed in a position where it comes into contact with the liquid crystal device. Furthermore, it is also preferable that the film for a liquid crystal device be laminated on the liquid crystal device and used in order to join the liquid crystal device to other members.

In addition, when a multilayer film having the film for a liquid crystal device is used for a liquid crystal device, the multilayer film may also be disposed in the same manner as the above film for a liquid crystal device, but it is preferable that the outermost layer of the multilayer film constituted by the film for a liquid crystal device be disposed in a position where it comes into contact with the liquid crystal device.

The liquid crystal device may be any device having a liquid crystal layer, and examples thereof include a liquid crystal light adjusting cell and a liquid crystal display, of which a liquid crystal light adjusting cell is preferred. Since the structure of the liquid crystal light adjusting cell is relatively simple, when the film for a liquid crystal device is used for the liquid crystal light adjusting cell, the film components are likely to infiltrate from the edge surface of the liquid crystal light adjusting cell and come into contact with the liquid crystal of the liquid crystal light adjusting cell, but since the film for a liquid crystal device of the present invention can reduce the NI point change, leaching of the film components into the liquid crystal is prevented and liquid crystal contamination can be suppressed.

Liquid crystal light adjusting cells generally have a liquid crystal layer. The liquid crystal layer used is not particularly limited and can be of the twisted nematic type, super twisted nematic type, phase transition type, guest host type, ferroelectric liquid crystal, and others, and polymer dispersed liquid crystal, such as PDLC (polymer dispersed liquid crystal), can also be used. Examples of the polymer dispersed liquid crystal include one called network liquid crystal, in which a network structure is formed by the polymer in the liquid crystal layer. It may also be a microcapsule-type liquid crystal (PDMLC), in which the liquid crystal is microencapsulated and dispersed in the binder resin. Examples of the liquid crystal layer also include one in which a space is formed for filling the liquid crystal inside by a spacer and the liquid crystal is filled and sealed in that space, but the spacer may be omitted.

The liquid crystal light adjusting cell may comprise two base films and a liquid crystal layer disposed between the two base films. Examples of the base films include a resin film using as the resin component a polyester resin such as polyethylene terephthalate and polyethylene naphthalate, an acrylic resin, a cellulose derivative such as triacetyl cellulose (TAC), a polyethersulfone (PES) resin, a polyimide resin, and others. Among these, a polyester resin film is preferred from the viewpoint of handleability and other properties, and above all, a polyethylene terephthalate film is more preferred.

In addition, each of the two base films may be provided with an electrode layer on the surface of the liquid crystal layer side. As the electrode layer, any conventionally known electrode material having transparency can be used with no particular limitation, and examples thereof include an indium tin oxide (ITO) conductive film, a tin oxide conductive film, a zinc oxide conductive film, and a polymer conductive film. An extraction electrode may be connected to the electrode layer, and a voltage may be applied between electrode layers via extraction electrodes.

When a voltage is applied between the electrode layers of the liquid crystal light adjusting cell, the alignment state in the liquid crystal layer is changed, resulting in a change in light transmittance. More specifically, for example, the light transmission mode and light scattering mode may be switched depending on whether a voltage is applied or not, and while light is scattered and the light transmittance is reduced in the light scattering mode, light rays are transmitted and the light transmittance is increased in the light transmission mode.

The thickness of the liquid crystal light adjusting cell is not particularly limited, but it is, for example, 0.05 mm or more and 2 mm or less, preferably 0.1 mm or more and 1 mm or less, and more preferably 0.2 mm or more and 0.8 mm or less.

### [Light adjusting apparatus]

As described above, it is preferable that the film for a liquid crystal device of the present invention be used in, for example, applications where the film is laminated on a liquid crystal device and is allowed to adhere to the liquid crystal device to join the liquid crystal device to other members.

It is particularly preferable that the film for a liquid crystal device be used in a light adjusting apparatus having a liquid crystal light adjusting cell. Specifically, it is preferable that the film for a liquid crystal device be used in a light adjusting apparatus comprising two transparent plates and at least one liquid crystal light adjusting cell disposed between the two transparent plates. The film for a liquid crystal device may be disposed between the transparent plate and the liquid crystal light adjusting cell and used as an interlayer film to join them. When two or more liquid crystal light adjusting cells are provided between two transparent plates, the film for a liquid crystal device may be disposed between the liquid crystal light adjusting cells and used as an interlayer film to join them. Examples of the transparent plate include a glass plate such as inorganic glass or organic glass, as will be described later. In addition, the multilayer film described above may be used as the interlayer film.

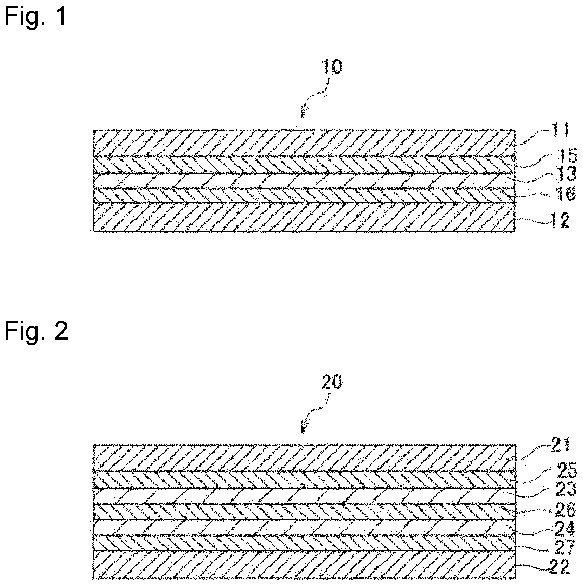

Next, specific examples of the light adjusting apparatus will be described in more detail with reference to Figs. 1 and 2. A light adjusting apparatus 10 shown in Fig. 1 comprises first and second transparent plates 11 and 12, a liquid crystal light adjusting cell 13 disposed between them, a first interlayer film 15 disposed between the first transparent plate 11 and the liquid crystal light adjusting cell 13, and a second interlayer film 16 disposed between the second transparent plate 12 and the liquid crystal light adjusting cell 13.

In the light adjusting apparatus 10, the first interlayer film 15 joins the first transparent plate 11 and the liquid crystal light adjusting cell 13, and the second interlayer film 16 joins the second transparent plate 11 and the liquid crystal light adjusting cell 13, thereby making the light adjusting apparatus 10 an integrated laminated body. Note that, as described above, the liquid crystal light adjusting cell 13 may be configured, for example, with a liquid crystal layer being disposed between two base films, and both outer surfaces may be constituted by the base films. Therefore, the first and second interlayer films 15 and 16 may adhere to the respective base films of the liquid crystal light adjusting cell 13.

At least one of the first and second interlayer films 15 and 16 is constituted by the film for a liquid crystal device of the present invention described above, but it is preferred that both be constituted by the film for a liquid crystal device of the present invention.

A light adjusting apparatus 20 shown in Fig. 2 is a light adjusting apparatus comprising two liquid crystal light adjusting cells 23 and 24.

Specifically, the light adjusting apparatus 20 comprises first and second transparent plates 21 and 22, and the first and second liquid crystal light adjusting cells 23 and 24, which are disposed between them. The first and second liquid crystal light adjusting cells 23 and 24 are aligned in the thickness direction of the light adjusting apparatus 20. In the light adjusting apparatus 20, provision of the two liquid crystal light adjusting cells 23 and 24 can, for example, ensure a high light transmittance in the light transmission mode while ensuring high light shielding in the light scattering mode. In addition, by switching the two liquid crystal light adjusting cells 23 and 24 on and off as appropriate, the light transmittance and light shielding can be finely adjusted.

The light adjusting apparatus 20 comprises first, second, and third interlayer films 25, 26, and 27 between the first transparent plate 21 and the first liquid crystal light adjusting cell 23, between the first and second liquid crystal light adjusting cells 23 and 24, and between the second liquid crystal light adjusting cell 24 and the second transparent plate 22, respectively. Then, the first interlayer film 25 joins the first transparent plate 21 and the first liquid crystal light adjusting cell 23, the second interlayer film 26 joins the first and second liquid crystal light adjusting cells 23 and 24, and the third interlayer film 27 joins the second liquid crystal light adjusting cell 24 and the second transparent plate 22, thereby making the light adjusting apparatus 20 an integrated laminated body. Note that, as described above, each of the liquid crystal light adjusting cells 23 and 24 may be configured, for example, with a liquid crystal layer being disposed between two base films, and both outer surfaces may be constituted by the base films, and therefore, each of the interlayer films 25, 26, and 27 may adhere to the base films of the liquid crystal light adjusting cells 23 and 24.

At least any of the first to third interlayer films 25, 26, and 27 is constituted by the film for a liquid crystal device of the present invention described above, but it is preferable that all of them be constituted by the film for a liquid crystal device of the present invention.

In addition, in each of the light adjusting apparatuses 10 and 20, the peripheral edge surface of the liquid crystal light adjusting cells may be sealed by an edge sealing material (not shown), if required.

In each of the light adjusting apparatuses 10 and 20, the film for a liquid crystal device is used in contact with, for example, the liquid crystal light adjusting cells, as shown in Figs. 1 and 2, and since it can reduce the NI point change, liquid crystal contamination can be prevented. Therefore, defects such as display unevenness can be suppressed in the liquid crystal light adjusting cells. In addition, by lowering the glass transition temperature, the film for a liquid crystal device of the present invention can also achieve good adhesiveness to the base films of the liquid crystal light adjusting cells and to the transparent plates, and for example, even when thermocompression-bonded at a low temperature, it can adhere to the liquid crystal light adjusting cells and the transparent plates with a high adhesive force.

In addition, in the above light adjusting apparatuses shown in Fig. 1 and 2, the interlayer films are shown to be interlayer films in a form that is of a single-layer structure, but the interlayer films may have a multilayer structure. In that case, it is preferable that the interlayer films be the multilayer films described above, and above all, it is preferable that the resin layers disposed in positions where they adhere to the liquid crystal light adjusting cells be constituted by the film for a liquid crystal device.

When using the film for a liquid crystal device of the present invention as the resin layers disposed in positions where they adhere to the liquid crystal light adjusting cells, even in the case of a multilayer structure, liquid crystal contamination can be effectively prevented. In addition, by lowering the glass transition temperature, the film for a liquid crystal device of the present invention can also achieve good adhesiveness to the base films of the liquid crystal light adjusting cells. Therefore, even when using a multilayer film, it can adhere to the liquid crystal light adjusting cells and others with a high adhesive force.

### (Transparent plate)

As the transparent plates used in the light adjusting apparatuses of the present invention (for example, the first and second transparent plates 21 and 22 described above), a glass plate can be used. The glass plate may be either inorganic glass or organic glass. As for the first and second transparent plates in the light adjusting apparatuses, one may be organic glass and the other may be inorganic glass, or both may be organic glass, or both may be inorganic glass.

The inorganic glass is not particularly limited, but examples thereof include a variety of glass plates such as float plate glass, tempered glass, colored glass, polished plate glass, figured glass, wire mesh plate glass, wired plate glass, ultraviolet absorbing plate glass, infrared reflecting plate glass, infrared absorbing plate glass, and green glass. The inorganic glass may be subjected to a surface treatment or other treatments.

The thickness of the inorganic glass is not particularly limited, but it is preferably 0.1 mm or more, and still more preferably 1.0 mm or more, and also preferably 5.0 mm or less, and still more preferably 3.2 mm or less.

The organic glass is not particularly limited, but examples thereof include a variety of organic glass plates such as a polycarbonate plate, a methacrylate plate such as a polymethyl methacrylate plate, an acrylonitrile styrene copolymer plate, an acrylonitrile butadiene styrene copolymer plate, a polyester plate, a fluorine-based resin plate, a polyvinyl chloride plate, a chlorinated polyvinyl chloride plate, a polypropylene plate, a polystyrene plate, a polysulfone plate, an epoxy resin plate, a phenolic resin plate, an unsaturated polyester resin plate, and a polyimide resin plate. The organic glass may be subjected to a surface treatment or other treatments as appropriate.

Among those described above, a polycarbonate plate is preferred in terms of its excellent transparency, impact resistance, and combustion resistance, and a methacrylate plate such as a polymethyl methacrylate plate is preferred in terms of its high transparency and excellent weather resistance and mechanical strength. Among these, a polycarbonate plate is preferred. In the present invention, even when organic glass with high hydrophobicity such as polycarbonate plates and methacrylate plates are used as the transparent plates, the film for a liquid crystal device can adhere to the transparent plates with high adhesiveness. Erosion of the organic glass by the film for a liquid crystal device can also be prevented.

The thickness of the organic glass is not particularly limited, but it is preferably 0.1 mm or more, and still more preferably 0.3 mm or more, and also preferably 5.0 mm or less, and still more preferably 3.0 mm or less.

The light adjusting apparatuses of the present invention can be produced by joining a transparent plate and a liquid crystal light adjusting cell, or liquid crystal light adjusting cells via an interlayer film, by thermocompression bonding or other processes. For example, the light adjusting apparatus shown in Fig. 1 may be produced by overlapping the first transparent plate 11, the first interlayer film 15, the liquid crystal light adjusting cell 13, the second interlayer film 16, and the second transparent plate 12 in this order and thermocompression-bonding them.

In addition, the light adjusting apparatus 20 shown in Fig. 2 may be produced by overlapping the first transparent plate 21, the first interlayer film 25, the first liquid crystal light adjusting cell 23, the second interlayer film 26, the second liquid crystal light adjusting cell 24, the third interlayer film 27, and the second transparent plate 22 in this order and thermocompression-bonding them.

The temperature at the time of thermocompression bonding in the production of light adjusting apparatuses is not particularly limited, but it is, for example, 40°C or higher and 120°C or lower, and preferably 50°C or higher and 100°C or lower. When the temperature at the time of thermocompression bonding is at or below the upper limits described above, it is possible to join a liquid crystal light adjusting cell and a transparent plate or liquid crystal light adjusting cells via an interlayer film without damaging or deteriorating the liquid crystal light adjusting cells. In addition, in the present invention, by lowering the glass transition temperature of the film for an electronic device as described above, it can adhere with a high adhesive strength even when thermocompression-bonded at a low temperature.

The light adjusting apparatus of the present invention can be used in a variety of fields. Specifically, it is used for window glass and other materials in a variety of carriages such as vehicles including automobiles and trains, ships, and aircraft, or in a variety of architectural structures such as buildings, condominiums, single-family homes, halls, and gymnasiums, or in machine tools such as cutting and grinding machines, and construction machinery such as shovels and cranes. It can also be used for partitions and other objects inside architectural structures.

### <Film for electronic device>

The present invention also provides, in another aspect, a film for an electronic device used for an electronic device. The film for an electronic device of the present invention contains a thermoplastic resin. In addition, the film for an electronic device of the present invention comprises no plasticizer or comprises at least any of a plasticizer having a hydroxy group and a plasticizer not having a hydroxy group. Then, the content of the plasticizer having a hydroxy group is 70 parts by mass or less based on 100 parts by mass of the thermoplastic resin, and the content of the plasticizer not having a hydroxy group is 25 parts by mass or less based on 100 parts by mass of the thermoplastic resin.

The film for an electronic device having the above configuration can prevent leaching of the plasticizer into the electronic device and erosion of the base material of the electronic device by the plasticizer.

Examples of the electronic device include an organic EL device and a plasma display device, in addition to the liquid crystal device described above. The electronic device described above often has a plastic substrate or a film substrate, but the film for an electronic device of the present invention can prevent erosion of the substrate of the electronic device (for example, plastic substrate or film substrate) by adjusting the type and amount of plasticizer as described above. It can also effectively prevent contamination of a variety of members in the electronic device other than the substrate, such as liquid crystal layer.

In the present invention, the configuration of the film for an electronic device is the same as the configuration of the film for a liquid crystal device of the present invention described above, and the details of the configuration of the thermoplastic resin, plasticizer, and other additives, glass transition temperature, thickness, and other properties are as described for the film for a liquid crystal device described above, and the description thereof will be omitted. In addition, as for the film for an electronic device, the NI point change upon contacting the film for an electronic device with liquid crystal is preferably -2°C to +2°C, more preferably -1.5°C to +1.5°C, still more preferably -1°C to +1°C, even more preferably -0.5°C to +0.5°C, and particularly preferably -0.3°C to +0.3°C, as described above.

In addition, although the arrangement manner of the film for an electronic device is not particularly limited as long as it is used for an electronic device, for example, it may be used by being laminated on the electronic device, or it may be used by being disposed around the electronic device. It is also preferable that the film for an electronic device be disposed in a position where it comes into contact with the electronic device. Moreover, it is also preferable that the film for an electronic device be laminated on the electronic device and used in order to join the electronic device to other members.

In addition, in the same manner as the film for a liquid crystal device, the film for an electronic device may be used in a single layer or may be used in a multilayer structure. In the case of a multilayer structure, at least one of a plurality of resin layers may be constituted by the film for an electronic device, but it is preferable that the outermost layer be constituted by the film for an electronic device. In the case of a multilayer film, it may be used in the same manner as the film for an electronic device described above, but it is preferable that the outermost layer of the multilayer film constituted by the film for an electronic device be disposed in a position where it comes into contact with the electronic device.

The electronic device is preferably a liquid crystal device. Accordingly, it is preferable that the film for an electronic device be used for a liquid crystal device, and in that case, the configuration of the liquid crystal device or a light adjusting apparatus comprising the liquid crystal device (liquid crystal light adjusting cell) is as described above.

### Examples

The present invention will be described in further detail with reference to Examples, but the present invention is not limited in any way by these Examples.

Note that the measurement method and evaluation method for each physical property value in the present invention are as follows.

### <NI point change>

The film for a liquid crystal device was cut into 10 mm × 5 mm, placed in a sample bottle (No. 2, capacity 6 ml), and furthermore, 0.5 g of liquid crystal (manufactured by Chisso Corporation, "JC-5001LA" or 4-cyano-4'-pentylbiphenyl (5CB)) was added. This bottle was placed in an oven at 100°C, left in an environment of 100°C for 1 hour, then allowed to stand at room temperature, and returned to room temperature (25°C), after which the liquid crystal part was taken out and used as a liquid crystal sample for evaluation.

The measurement was carried out under conditions in which a differential scanning calorimeter (DSC, manufactured by Hitachi High-Technologies Corporation, "DSC7000X") was used, 5 mg of the liquid crystal sample for evaluation was sealed in an aluminum sample pan, and the temperature increasing rate was 10°C/min, and the NI point (transition temperature) of the liquid crystal sample for measurement was obtained.

In addition, 5 mg of the liquid crystal alone before placing in a sample bottle was sealed in an aluminum sample pan and the NI point was measured under the same conditions, and the results were used as the blank. The NI point of the blank was 76.8°C. The difference in transition temperature between the liquid crystal alone (blank) and the liquid crystal sample for evaluation was defined as the NI point change.

A change temperature of -1 to +1°C was evaluated as "A", a change temperature of -2 to +2°C, but not -1 to +1°C, was evaluated as "B", and a change temperature greater than that was evaluated as "C".

### <Adhesiveness>

A film for a liquid crystal device sized to a length of 15 mm and a width of 15 mm was prepared, and furthermore, two glass plates with a thickness of 2 mm, a length of 25 mm, and a width of 100 mm in accordance with JIS K6735 were prepared. The two glass plates were disposed so that their longitudinal directions were perpendicular to each other, and they were overlapped crosswise via the film for a liquid crystal device.

Thereafter, using a spacer of the same thickness as the film for a liquid crystal device so that the thickness of the film for a liquid crystal device was constant, the two glass plates that had been overlapped via the film for a liquid crystal device were temporarily compression-bonded for 3 minutes under conditions of 100°C and 0.1 MPa in a vacuum laminator. After that, the two sheets of polycarbonate plate glass that had been temporarily compression-bonded were subjected to final compression-bonding for additional 1 hour under conditions of 100°C and 0.5 MPa to obtain a laminated glass sample.

A cross peeling test was carried out on the obtained laminated glass sample. Specifically, the maximum load (N) was measured when the laminated glass sample was peeled off in a direction perpendicular to the adhesive surface at a speed of 10 mm/min under an environment with a temperature of 23°C. This maximum load (N) was defined as the adhesive force and evaluated based on the following criteria.

### (Evaluation criteria)

A: The maximum load is 150 N or more.
B: The maximum load is 80 N or more and less than 150 N.
C: The maximum load is less than 80 N.

### <Glass transition temperature (Tg)>

The film for a liquid crystal device obtained in Examples and Comparative Examples were cut into a length of 10 mm and a width of 5 mm, and the viscoelasticity was measured using a dynamic viscoelasticity measuring device (manufactured by IT Keisoku Seigyo Co., Ltd., product name "DVA-200") under the measurement conditions below. Peak temperatures of the loss tangent tan δ obtained from the results of the viscoelasticity measurement were read. The first peak temperature counted from the low temperature side in the temperature region of -50 to 150°C was defined as the glass transition temperature (Tg).
(Measurement conditions)
deformation mode: shear mode, measurement temperature: -50°C to 200°C, temperature increasing rate: 5°C/min, measurement frequency: 1 Hz, strain: 1%

### <Amount of modification, degree of acetalization, degree of acetylation, and amount of hydroxy groups>

The polyvinyl acetal-based resin was dissolved in DMSO-d6 or chloroform-d and measured using 1H-NMR (nuclear magnetic resonance spectrum), and the above properties were determined by analyzing the molar ratio of each unit. The results are described in Table 1.

### (Example 1)

### [Synthesis of ethylene oxide-modified polyvinyl alcohol]

In a flask equipped with a stirrer, a thermometer, a dropping funnel, and a reflux condenser, 1000 parts by mass of vinyl acetate, 320 parts by mass of a polyoxyethylene monovinyl ether with an average repeating unit m = 10, and 300 parts by mass of methanol were added, and after carrying out a nitrogen purge in the system, the temperature was increased to 60°C. To this system, 1.1 parts by mass of 2,2-azobisisobutyronitrile was added to initiate polymerization. The polymerization was terminated 5 hours after the initiation of the polymerization. The solid concentration in the system at the time of polymerization termination was 53% by mass, and the polymerization yield was 65% by mass with respect to the entire monomers. After removing unreacted monomers under reduced pressure, a 30 mass% methanol solution of the copolymer was obtained. The obtained copolymer was confirmed to contain 95.0 mol% of vinyl acetate units and 5.0 mol% of ethylene oxide-containing alkyl vinyl ether units from the quantification of unreacted monomers.

While stirring 100 parts by mass of the obtained methanol solution of the copolymer at 40°C, 6 .0 parts by mass of a 3 mass% NaOH methanol solution was added, and the mixture was mixed well and then left to stand. After 2 hours, the solidified polymer was ground in a grinder, washed with methanol, and then dried to obtain polymer powder (ethylene oxide-modified polyvinyl alcohol). The ethylene oxide-modified polyvinyl alcohol had 1 mol% of acetyl group, an amount of ethylene oxide units of 5 mol%, and a degree of polymerization of 700.

### [Preparation of polyvinyl butyral (PVB1)]

100 parts by mass of the obtained polymer powder was added to 753 parts by mass of pure water, and dissolved by stirring at a temperature of 90°C for about 2 hours. The solution was cooled to 40°C, 56 parts by mass of hydrochloric acid with a concentration of 35 mass% and 54 parts by mass of n-butyraldehyde were added, the liquid temperature was lowered to 20°C, an acetalization reaction was carried out while retaining the temperature, and the reaction product was precipitated. Thereafter, the reaction was completed while retaining the liquid temperature at 40°C for 3 hours, and after passing through neutralization, washing with water, and drying by ordinary methods, white powder of a polyvinyl acetal-based resin (PVB1) was obtained.

### [Fabrication of film for liquid crystal device]

The obtained polyvinyl acetal-based resin was subjected to press molding at a temperature of 160°C and a pressure of 20 MPa to obtain a resin film (film for a liquid crystal device) with a thickness of 800 µm.

### (Example 2)

PVB2 was obtained, which was prepared by the same method as in Example 1, except that 320 parts by mass of the polyoxyethylene monovinyl ether with an average repeating unit m = 10 was replaced by 180 parts by mass of a polyoxyethylene monovinyl ether with a repeating unit m = 30. The degree of polymerization of the ethylene oxide-modified polyvinyl alcohol was 860. Using PVB2, a resin film (film for a liquid crystal device) with a thickness of 800 µm was obtained by the same method as in Example 1.

### (Example 3)

PVB2-2 was obtained, which was prepared by the same method as in Example 2, except that the amount of the 3 mass% NaOH methanol solution was changed from 6.0 parts by mass to 2.7 parts by mass. Using PVB2, a resin film (film for a liquid crystal device) with a thickness of 800 µm was obtained by the same method as in Example 1.

### (Example 4)

PVB3 was obtained, which was prepared by the same method as in Example 1, except that 320 parts by mass of the polyoxyethylene monovinyl ether with an average repeating unit m = 10 was replaced by 180 parts by mass of a polyoxypropylene monoallyl ether with a repeating unit m = 30. The degree of polymerization of the ethylene oxide-modified polyvinyl alcohol was 1100. Using PVB3, a resin film (film for a liquid crystal device) with a thickness of 800 µm was obtained by the same method as in Example 1.

### (Example 5)

PVB3-2 was obtained, which was prepared by the same method as in Example 1, except that 320 parts by mass of the polyoxyethylene monovinyl ether with an average repeating unit m = 10 was replaced by 520 parts by mass of a polyoxyethylene polyoxypropylene monoallyl ether with a repeating unit m = 50. The degree of polymerization of the ethylene oxide and propylene oxide-modified polyvinyl alcohol was 1500. Using PVB2, a resin film (film for a liquid crystal device) with a thickness of 800 µm was obtained by the same method as in Example 1.

### (Example 6)

In a 500-mL separable flask that had been dried under a stream of nitrogen, 300 g of THF and 30 g of a polyvinyl butyral (degree of polymerization: 1700, manufactured by Sekisui Chemical Co., Ltd., PVB4) were charged, and the polyvinyl butyral was dissolved by stirring with stirring blades at 65°C.

To this solution, 30 g of n-octadecyl isocyanate was added as the modifying agent and the mixture was stirred for 10 minutes. The solution was taken out of the separable flask and poured into an aluminum pad on which a PET release film (product name "PET50D1-C", manufactured by Nippa Corporation) was laid with the release treated side facing up, and then heated in an oven at 130°C for 2 hours to allow a reaction, resulting in a film composed of a polyvinyl acetal-based resin (PVB6) having the functional group of formula (1-1). The obtained polyvinyl acetal-based resin was subjected to press molding at a temperature of 160°C and a pressure of 20 MPa to obtain a resin film (film for a liquid crystal device) with a thickness of 800 µm. When the obtained resin film was measured by an infrared spectrophotometer (IR), progress of the reaction was confirmed by disappearance of the peak of the isocyanate group (wavenumber: 2260 cm-1).

### (Example 7)

A resin film (film for a liquid crystal device) was fabricated by the same method as in Example 1, using PVB4 (degree of polymerization: 1700, manufactured by Sekisui Chemical Co., Ltd.) used in Example 4 instead of PVB1.

### (Example 8)

PVB4 and a plasticizer, polyester polyol ("OD-X-2586" manufactured by DIC Corporation, 3 hydroxy groups, molecular weight 850), were thoroughly kneaded in the proportions shown in Table 1 to obtain a composition for a film. The obtained composition for a film was subjected to press molding at a temperature of 160°C and a pressure of 20 MPa to obtain a resin film (film for a liquid crystal device) with a thickness of 800 µm.

### (Examples 9 to 11 and Comparative Examples 1 to 2)

PVB1, PVB4, and PVB5 and a plasticizer, triethylene glycol di-2-ethylhexanoate (3GO) (0 hydroxy groups), were thoroughly kneaded in the proportions shown in Table 1 to obtain compositions for a film. The obtained compositions for a film were subjected to press molding at a temperature of 160°C and a pressure of 20 MPa to obtain resin films (films for a liquid crystal device) with a thickness of 800 µm.

Note that PVB5 was a polyvinyl butyral resin with an average degree of polymerization of 830.

### (Example 12)

PVB7 was obtained, which was prepared by the same method as in Example 1, except that 320 parts by mass of the polyoxyethylene monovinyl ether with an average repeating unit m = 10 was replaced by 110 parts by mass of a polyoxypropylene monoallyl ether with a repeating unit m = 30. The degree of polymerization of the ethylene oxide-modified polyvinyl alcohol was 1100. Using PVB7, a resin film (film for a liquid crystal device) with a thickness of 800 µm was obtained by the same method as in Examples 9 to 11, except that triethylene glycol di-2-ethylhexanoate (3GO) (0 hydroxy groups) was replaced by a polypropylene glycol (manufactured by FUJIFILM Wako Pure Chemical Corporation, PPG1000, 2 hydroxy groups) with a number average molecular weight of 1000.

### (Example 13)

A resin film (film for a liquid crystal device) with a thickness of 800 µm was obtained by the same method as in Example 12, except that the polypropylene glycol was changed to a polyoxypropylene diglyceryl ether (manufactured by NOF Corporation, product name "UNILUBE DGP-700", 4 hydroxy groups) with a number average molecular weight of 700.

### (Example 14)

A resin film (film for a liquid crystal device) with a thickness of 800 µm was obtained by the same method as in Example 12, except that the polypropylene glycol was replaced by a polyoxypropylene glyceryl ether (manufactured by NOF Corporation, product name "UNIOL TG-1000R", 2 hydroxy groups) with a number average molecular weight of 1000.

### (Example 15)

A resin film (film for a liquid crystal device) with a thickness of 800 µm was obtained by the same method as in Example 12, except that the polypropylene glycol was changed to a polyoxypropylene diglyceryl ether (Sakamoto Yakuhin Kogyo Co., Ltd., product name "SCP-1600", 4 hydroxy groups) with a number average molecular weight of 1600.

**[Table 1]**

| | PVB type | Modifying agent | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Comparative Example 1 | Comparative Example 2 |
|---|---|---|---|---|---|---|---|---|---|---|---|---|---|---|---|---|---|---|---|
| Resin (parts by mass) | PVB1 | EO(m=10) | 100 | | | | | | | | | | 100 | | | | | | |
| | PVB2 | EO(m=30) | | 100 | | | | | | | | | | | | | | | |
| | PVB2-2 | EO(m=30) | | | 100 | | | | | | | | | | | | | | |
| | PVB3 | PO(m=30) | | | | 100 | | | | | | | | | | | | | |
| | PVB3-2 | EO/PO(m=50) | | | | | 100 | | | | | | | | | | | | |
| | PVB4 | None | | | | | | | 100 | 100 | | 100 | | | | | | 100 | 100 |
| | PVB5 | None | | | | | | | | | 100 | | | | | | | | |
| | PVB6 | Alkyl isocyanate (C18) | | | | | | 100 | | | | | | | | | | | |
| | PVB7 | EO/PO(m=30) | | | | | | | | | | | | 100 | 100 | 100 | 100 | | |
| Plasticizer (parts by mass) | 3GO | 0 hydroxy groups | | | | | | | | | 10 | 20 | 10 | | | | | 40 | 35 |
| | OD-X-2586 | 3 hydroxy groups | | | | | | | | 40 | | | | | | | | | |
| | PPG1000 | 2 hydroxy groups | | | | | | | | | | | | 15 | | | | | |
| | DGP700 | 4 hydroxy groups | | | | | | | | | | | | | 15 | | | | |
| | TG1000R | 2 hydroxy groups | | | | | | | | | | | | | | 15 | | | |
| | SCP-1600 | 4 hydroxy groups | | | | | | | | | | | | | | | 15 | | |
| Liquid crystal | | | 5001LA | 5001LA | 5001LA | 5001LA | 5001LA | 5001LA | 5001LA | 5001LA | 5001LA | 5001LA | 5001LA | 5CB | 5GB | 5CB | 5CB | 5001LA | 5CB |
| PVB | Amount of constituent units (mol) | Butyral | 77 | 78 | 78 | 72 | 75 | 66 | 66 | 66 | 64 | 66 | 77 | 73 | 73 | 73 | 73 | 66 | 66 |
| | | Acetyl | 1 | 1 | 8 | 1 | 1 | 1 | 1 | 1 | 1 | 1 | 1 | 1 | 1 | 1 | 1 | 1 | 1 |
| | | Hydroxy groups | 17.0 | 18.8 | 11.8 | 23.4 | 21.2 | 11.9 | 33.0 | 33.0 | 35.0 | 33.0 | 17.0 | 23.5 | 23.5 | 23.5 | 23.5 | 33.0 | 33.0 |
| | | Modified groups | 5.0 | 2.2 | 2.2 | 3.4 | 2.8 | 21.1 | 0.0 | 0.0 | 0.0 | 0.0 | 5.0 | 2.5 | 2.5 | 2.5 | 2.5 | 0.0 | 0.0 |
| Film | Tg | °C | 43 | 43 | 38 | 37 | 36 | 43 | 70 | 26 | 46 | 46 | 28 | 29 | 32 | 30 | 34 | 25 | 25 |
| | NI point change | °C(100°C,1h) | -0.01 | -0.20 | -0.23 | -0.08 | -0.09 | -0.02 | -0.03 | -0.18 | -0.86 | -1.33 | -0.91 | -0.52 | -0.22 | -0.45 | -0.31 | -2.27 | -3.12 |
| | | Judgement | A | A | A | A | A | A | A | A | A | B | A | A | A | A | A | C | C |
| | Adhesive force | Judgement | A | A | A | A | A | B | C | A | B | B | A | A | A | B | B | A | A |

In the above film for a liquid crystal device in each Example, the NI point change upon contacting it with liquid crystal was reduced by adjusting the configuration of the thermoplastic resin, the presence or absence of plasticizer, and the type and amount of plasticizer as appropriate. Therefore, even when used for a liquid crystal device, liquid crystal contamination can be suppressed and defects such as display unevenness can be prevented.

In contrast, the films of Comparative Examples 1 and 2 exhibited large NI point changes upon contacting them with liquid crystal, and therefore, when used for a liquid crystal device, it is considered that the liquid crystal would be contaminated and defects such as display unevenness would occur.

### Reference Signs List

10, 20 Light adjusting apparatus
11, 21 First transparent plate
12, 22 Second transparent plate
13Liquid crystal light adjusting cell
15, 25 First interlayer film
16, 26 Second interlayer film
23First liquid crystal light adjusting cell
24Second liquid crystal light adjusting cell
27Third interlayer film

## Claims

1. A film for a liquid crystal device used for a liquid crystal device, comprising a thermoplastic resin, the film providing a NI point change upon contacting the film for a liquid crystal device with liquid crystal being -2°C to +2°C.

2. The film for a liquid crystal device according to claim 1, wherein
the film comprises no plasticizer or comprises at least any of a plasticizer having a hydroxy group and a plasticizer not having a hydroxy group,
a content of the plasticizer having a hydroxy group is 70 parts by mass or less based on 100 parts by mass of the thermoplastic resin, and
a content of the plasticizer not having a hydroxy group is 25 parts by mass or less based on 100 parts by mass of the thermoplastic resin.

3. The film for a liquid crystal device according to claim 2, wherein the film comprises no plasticizer or comprises a plasticizer containing a hydroxy group in an amount of 70 parts by mass or less based on 100 parts by mass of the thermoplastic resin.

4. The film for a liquid crystal device according to any one of claims 1 to 3, wherein the thermoplastic resin is at least one selected from the group consisting of a polyvinyl acetal-based resin, an ionomer resin, a polyurethane resin, a polyolefin resin, and an ethylene-vinyl acetate copolymer resin.

5. The film for a liquid crystal device according to claim 4, wherein the thermoplastic resin is a polyvinyl acetal-based resin.

6. The film for a liquid crystal device according to claim 4 or 5, wherein the polyvinyl acetal-based resin comprises a modified polyvinyl acetal resin having a unit other than an acetal group, an acetyl group, and a hydroxy group.

7. The film for a liquid crystal device according to any one of claims 4 to 6, wherein the polyvinyl acetal-based resin has a polyoxyalkylene group.

8. The film for a liquid crystal device according to any one of claims 1 to 7, wherein the film has a glass transition temperature of 55°C or lower.

9. The film for a liquid crystal device according to any one of claims 1 to 8, wherein the NI point change is -1°C to +1°C.

10. The film for a liquid crystal device according to any one of claims 1 to 9, wherein the film is for a liquid crystal light adjusting cell.

11. A liquid crystal device provided with the film for a liquid crystal device according to any one of claims 1 to 10.

12. A light adjusting apparatus, comprising the film for a liquid crystal device according to claim 10 and a liquid crystal light adjusting cell.

13. A film for an electronic device used for an electronic device,
the film comprising a thermoplastic resin,
the film comprising no plasticizer or comprising at least any of a plasticizer having a hydroxy group and a plasticizer not having a hydroxy group, a content of the plasticizer having a hydroxy group being 70 parts by mass or less based on 100 parts by mass of the thermoplastic resin, and a content of the plasticizer not having a hydroxy group being 25 parts by mass or less based on 100 parts by mass of the thermoplastic resin.
